# EUROPEAN PATENT APPLICATION

(11) **EP 3 062 074 A1**
(43) Date of publication of application: **31.08.2016**
(21) Application number: 15156872.2
(22) Date of filing: 27.02.2015
(51) Int. Cl.: G01J 5/22, G01J 5/00, G01J 5/06

(54) **Method and system for detecting a need for recalibrating a microbolometer, and method and system for recalibrating a microbolometer**

(71) Applicant: Axis AB, 223 69 Lund (SE)
(72) Inventor: Winzell, Thomas, 247 97 Flying (SE); Johansson, Emanuel, 245 65 Hjärup (SE)
(74) Representative: Awapatent AB

(57) **Abstract**

A method of detecting a need for recalibrating a microbolometer is disclosed, said microbolometer comprising a plurality of sensor pixels. The method comprises the steps of: for a predetermined number of monitored sensor pixels monitoring a response signal (S01), storing a first statistical measure (S02) representative of response values read over a first time period, storing a second statistical measure (S03) representative of response values read over a second time period, said second time period being later than said first time period, comparing said first statistical measure to said second statistical measure (S04), and if said second statistical measure differs from said first response range by more than a predetermined change, determining that said microbolometer needs recalibration (S06). A system for detecting a need for recalibration is also disclosed, as well as a method and a system for recalibrating a microbolometer.

## Description

### Technical field

The present invention is related to the field of microbolometers, and more specifically to determining when a microbolometer is in need of recalibration. The present invention further relates to recalibration of microbolometers.

### Background

Microbolometers are used for thermal imaging, e.g., in monitoring cameras. Before the advent of microbolometers, cryogenically cooled photon detectors were needed as thermal imaging sensors. The size and cost of such detectors limit their possible use. Micromachining technologies have made it possible to manufacture uncooled thermal sensors in the form of microbolometers.

Microbolometers are generally made up of an array of pixels, each constructed from a thermo-sensing material whose electrical resistivity changes as it absorbs incident IR radiation. The IR-absorbing material is connected to a read-out circuit by means of electrodes, and a reflector is arranged inside the IR-absorbing material for reflecting back IR radiation passing through the absorbing material. In order to reduce the influence of convection on the heat absorbing properties of the pixels, the microbolometer is encapsulated in vacuum. A getter material may be deposited in the microbolometer for reacting with or adsorbing gas molecules released inside the microbolometer, thereby extending the longevity of the vacuum. IR radiation incident on the microbolometer will change the resistivity of the IR-absorbing material, and this change is transferred to the read-out circuit for processing. The change in resistivity is translated into a temperature of the part of the captured scene from which the IR radiation radiated.

The functioning of a microbolometer may be characterised by its responsivity. The responsivity may be defined as the ratio of the output signal of the pixels to the incident radiation power. The output signal may be a current or a voltage. Thus, the responsivity may be measured in amperes per watt or in volts per watt. Microbolometers may need to be calibrated such as to give a uniform response over the entire array of pixels. Methods for such uniformity calibration are known to the skilled person. However, even though a microbolometer has been properly calibrated for uniformity, the overall responsivity of the microbolometer may decrease over time. An important cause of this decrease in responsivity is leakage, leading to an increasing internal pressure in the microbolometer, which may also somewhat incorrectly be referred to as a decaying vacuum. If a microbolometer is to give correct temperature readings also after a prolonged period of use, there is therefore a need for methods and systems for determining when the microbolometer is in need of recalibration, and for recalibrating the microbolometer.

### Summary of the invention

It is an object of the present invention to provide a method of detecting a need for recalibrating a microbolometer, which makes it possible to detect if the responsivity of the microbolometer has decreased. Another object of the present invention is to provide a method of recalibrating a microbolometer, which may make it possible to compensate for a decreased responsivity of an aging microbolometer. It is also an object of the invention to provide a system for detecting a need for recalibrating a microbolometer, which makes it possible to detect when a microbolometer has aged such that it needs recalibrating. A further object is to provide a system for recalibration of a microbolometer, which enables compensation for a decreased responsivity of an aging microbolometer.

According to a first aspect, these objects are achieved, in full or at least in part, by a method of detecting a need for recalibrating a microbolometer, said microbolometer comprising a plurality of sensor pixels, said method comprising the steps of: for a predetermined number of monitored sensor pixels monitoring a response signal, storing a first statistical measure representative of response values read over a first time period, storing a second statistical measure representative of response values read over a second time period said second time period being later than said first time period, comparing said first statistical measure to said second statistical measure, and if said second statistical measure differs from said first statistical measure by more than a predetermined change, determining that said microbolometer needs recalibration. With such a method it may be possible to determine when a microbolometer has aged such that it needs recalibration. If, for instance, a mean response value measured over the second time period is significantly lower than the mean response value measured over the first time period, this may indicate that the responsivity of the microbolometer has decreased, and that there is a need for recalibration.

It should be noted that when referring to a decreasing responsivity of the microbolometer, a decrease of the overall responsivity of the microbolometer is intended, i.e. a decrease of the responsivity of a significant portion or majority of the sensor pixels. Thus, the need for recalibration due to a decreased responsivity of the microbolometer should not be confused with the need for recalibrating a microbolometer for achieving a uniform responsivity of all sensor pixels.

In a variant of the method, the first and second statistical measures are each a mean response value, a median response value, or a minimum and maximum response value of the respective time period. These statistical measures may provide representative data on the response values of the sensor pixels.

A first and a second statistical measure of the response values may be stored for each monitored pixel. In this manner, data for each monitored pixel may be retained and used for individual comparisons or for, e.g., averaging over all monitored pixels.

The first time period and the second time period may each be, e.g., one month or one year.

The first and second time periods may be at least one year apart. With a sufficiently long time between the first and second time periods, it may be possible to detect a decrease in responsivity of the microbolometer.

According to a variant, the method further comprises measuring an ambient temperature adjacent said microbolometer during said first and second time periods, storing said ambient temperature measurements, and adjusting said comparison of the first and second statistical measures based on said ambient temperature measurements. In this manner, it is possible to compensate for differences in ambient temperature when comparing the response values of the first time period to the response values of the second time period, such that an overall cooler second time period does not lead to an incorrect conclusion of decreased responsivity of the microbolometer.

The predetermined change may comprise a range level threshold value, and it may be determined that the microbolometer needs recalibration if the second statistical measure is lower than the first statistical measure and the difference between the statistical measures is above the range level threshold. This may provide a practical approach to determining when the microbolometer has lost some of its responsivity and is in need of recalibration.

According to a second aspect, the abovementioned objects are achieved, in full or at least in part, by a method of recalibrating a microbolometer comprising the steps of: determining that a recalibration is needed according to the first aspect, based on the comparison of the first and second statistical measures, calculating a correction value, and modifying response values of said sensor pixels of said microbolometer using said correction value, thereby providing recalibrated response values. Such a method may make it possible to compensate for a decreased responsivity of an aging microbolometer. The step of determining that a recalibration is needed may be varied in the same way as the method of the first aspect described above, with accompanying advantages.

Calculating a correction value may comprise calculating a gain factor, and modifying said response values may comprise multiplying response values of the sensor pixels of the microbolometer by said gain factor. Thus, a decreased responsivity may be compensated for. In this manner, an image produced using the microbolometer may appear the same after the microbolometer has aged to some extent as it would have when the microbolometer was new.

Calculating a correction value may alternatively or additionally comprise calculating an offset value, and modifying said response values may comprise adding said offset value to response values of the sensor pixels of the microbolometer. This is also a way of compensating for a decreased responsivity.

According to a third aspect, the abovementioned objects are achieved, in full or at least in part, by a system for detecting a need for recalibrating a microbolometer, said detecting system comprising: a sensor pixel monitor arranged to monitor a response signal of a predetermined number of sensor pixels of said microbolometer, a memory arranged to store a first statistical measure representative of response values read over a first time period, and arranged to store a second statistical measure representative of response values read over a second time period, said second time period being later than said first time period, a comparing module arranged to compare said first statistical measure to said second statistical measure, and a recalibration determinator arranged to determine that said microbolometer needs recalibration if said second statistical measure differs from said first statistical measure by more than a predetermined change. By arranging such a system, it may be possible to determine when a microbolometer has aged to such an extent that it needs recalibration.

The system may further comprise a temperature sensor arranged to measure an ambient temperature adjacent said microbolometer. Such a temperature sensor may enable compensating the comparison of response values of the first and second time periods for differences in ambient temperature.

According to an embodiment, the system further comprises a short term clock device for measuring the first and second time periods, and a long term clock device for measuring a time span including at least the first and second time periods.

The system according to the third aspect may generally be embodied in the same ways as the method according to the first aspect, with accompanying advantages.

According to a fourth aspect the abovementioned objects are achieved, in full or at least in part, by a system for recalibration of a microbolometer, said recalibration system comprising: a detecting system according to the third aspect, a correction calculator arranged to calculate a correction value as at least one of a gain factor and an offset value based on the comparison of the first and second statistical measures, and a recalibrator arranged to apply said correction value to response values of said sensor pixels of said microbolometer, thereby providing recalibrated response values. Using such a system, it may be determined when a microbolometer has aged to such an extent that it needs recalibration, and a compensation for the reduced responsivity may be made.

The system according to the fourth aspect may generally be embodied in the same ways as the method according to the second aspect.

According to a fifth aspect, the abovementioned objects are achieved, in full or at least in part, by a computer program product comprising a computer-readable storage medium with instructions adapted to carry out the method according to the first or second aspect when executed by a processor.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a", "an", "the", and "said" are intended to mean that there are one or more of the elements unless the context clearly dictates otherwise. Thus, for example, a reference to "an object" or "the object" may include several objects, and the like. Furthermore, the word "comprising" does not exclude other elements or steps.

### Brief description of the drawings

The invention will now be described in more detail by way of example and with reference to the accompanying schematic drawings, in which:
Fig. 1 is a cross-sectional view of the general structure of a sensor pixel of a microbolometer,
Fig. 2 is a top view of a microbolometer made up of a plurality of sensor pixels such as the one in Fig. 1,
Fig. 3 is a flow chart illustrating a method of detecting a need for recalibrating a microbolometer,
Fig. 4 is a flow chart illustrating a variant of the method illustrated in Fig. 3,
Fig. 5 is a block diagram of a system for detecting a need for recalibrating a microbolometer,
Fig. 6 is a flow chart illustrating a method of recalibrating a microbolometer,
Fig. 7 is a block diagram of a system for recalibrating a microbolometer; and
Fig. 8 is a graph showing exemplary data of monitored sensor pixels of the microbolometer in Fig. 2.

### Detailed description of embodiments

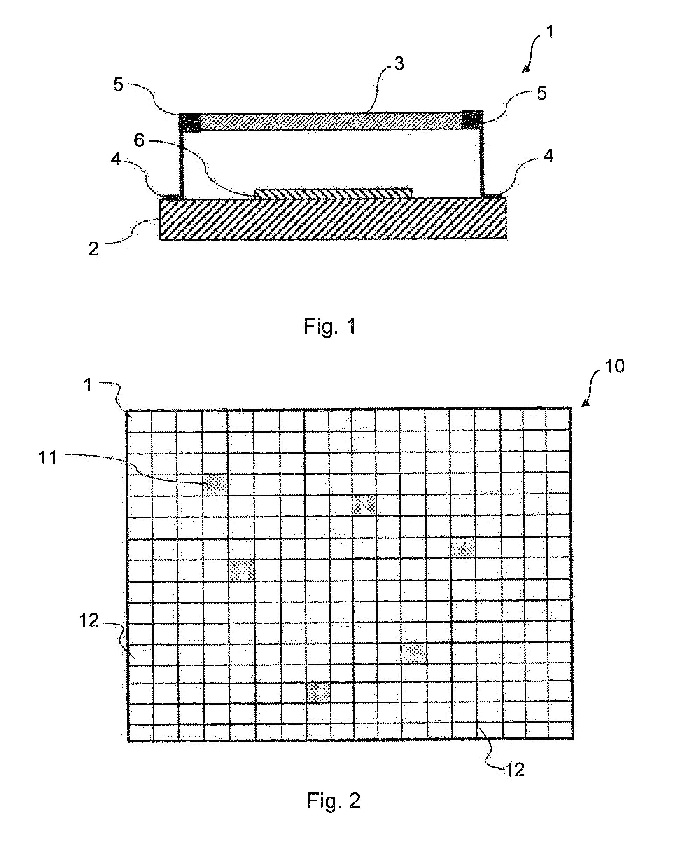

Fig. 1 shows a microbolometer sensor pixel 1 in cross section. The sensor pixel 1 has a bottom layer in the form of a silicon substrate and a readout integrated circuit 2. An IR-absorbing material 3 is arranged above the bottom layer via electrodes 4 and contacts 5. A reflector 6 is arranged beneath the IR-absorbing material 3. As indicated in Fig. 2, a microbolometer 10 is made up of an array of sensor pixels 1 of the type shown in Fig. 1. The array of sensor pixels is encapsulated in vacuum in order to minimize heat loss through convection. Microbolometers come in different sizes with, e.g., from 160 x 120 pixels to 1024 x 768 pixels. In the example described in the following, the microbolometer 10 is made up of 384 x 288 pixels. However, for the sake of clarity, Fig. 2 does not show all these sensor pixels, but only a reduced number of sensor pixels 1.

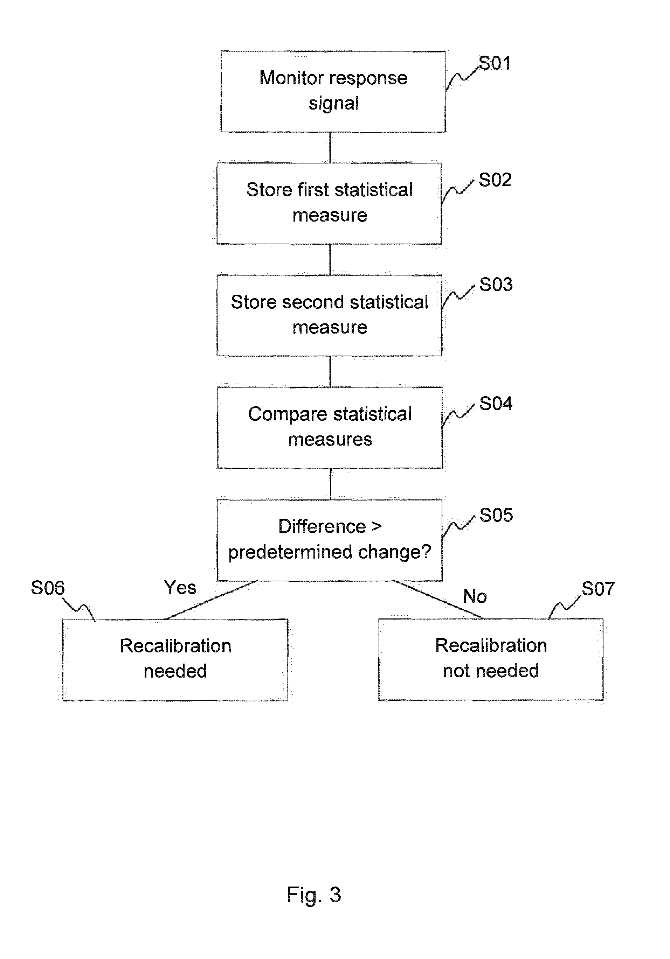

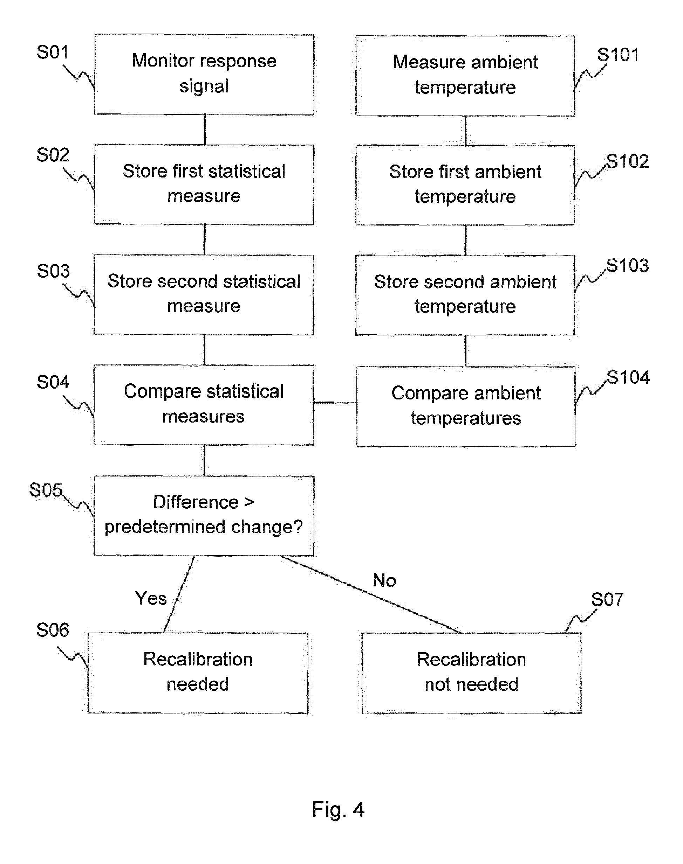

As discussed above in the background section, microbolometers generally exhibit a decreasing responsivity over time. Thus, an object of a certain temperature in a monitored scene will not appear the same when the microbolometer is several years old as it would if the microbolometer were new. Depending on the application in which the microbolometer is used, this might or might not be a problem. If the microbolometer is used in a thermal camera for, e.g., perimeter surveillance, it is generally not a problem, because a person moving in the scene will still have a temperature deviating from that of the surroundings, and will therefore be detectable in an image captured by the thermal cameras as having pixel intensities differing from the pixel intensities of other parts of the image. However, if the microbolometer is used in a temperature alarm camera, which is used for, e.g., monitoring the temperature of electrical substations or coal piles, a decreasing responsivity of the microbolometer will generally be a more serious problem, since an object that has a temperature of, e.g., 150 °C and that appeared as having that temperature in images captured when the microbolometer was new, will appear to have a lower temperature in images captured when the microbolometer has aged to a certain extent. The temperature alarm camera could be checked from time to time by making temperature measurements in the scene, using another measurement tool, such as an external thermometer, and comparing the external measurements to the temperature data provided by the microbolometer. A recalibration could then be made based on these comparisons. Still, this may be a time-consuming and work-intensive approach. Examples of inventive methods and systems for detecting a need for recalibration, and for recalibrating a microbolometer, which may provide a more efficient approach will be described in the following. Steps of the methods are indicated in Figs. 3 and 4.

A response signal of a number of sensor pixels of the microbolometer is monitored (step S01 in Fig. 3) for detecting a need for recalibration of the microbolometer. In Fig. 2 such monitored sensor pixels 11 are indicated by a dotted pattern. It should be noted that the monitored pixels 11 are no different from the other sensor pixels of the microbolometer, and that the pattern used in Fig. 2 is only for illustration. It is possible, although normally not necessary, to monitor all sensor pixels. Generally, only some of the sensor pixels will be monitored. The number of monitored pixels should be large enough that any defective or "dead" pixels do not severely influence the average response value of the monitored pixels. The number of monitored pixels may be chosen as a percentage of the total number of pixels of the microbolometer. In the examples described herein 100 pixels are monitored. The monitored pixels may advantageously be spread out over the area of the microbolometer. Preferably, sensor pixels located at the edge of the microbolometer 10, such as the pixels indicated by the reference numeral 12 in Fig. 2, should not be chosen as monitored pixels. This is due to the fact that the edge pixels 12 are more subjected to the surrounding conditions than pixels further in on the microbolometer 10, and they may therefore exhibit a different aging behaviour than the pixels further in from the edge.

For each monitored pixel 11, a first statistical measure of the response signal measured over a first time period is stored (step S02). The first time period may, e.g., be one month. The first statistical measure may for instance be a mean response value or a median response value of the first time period. The first statistical measure may alternatively be a minimum response value and a maximum response value measured during the first time period.

Further, a second statistical measure of the response signal measured over a second time period is stored (S03) for each monitored pixel 11. The second time period is later than the first time period, and it is preferably of the same length as the first time period, e.g. one month. The second statistical measure is of the same type as the first statistical measure. Thus, if a mean response value was stored as the first statistical measure, a mean response value is stored as the second statistical measure, too, and so on.

The first and second statistical measures may be stored for each monitored pixel 11, or they may be stored as a mean value calculated for all the monitored pixels 11.

The first statistical measure is compared to the second statistical measure (step S04). The first time period and the second time period are separated by a time span that is long enough that the responsivity of the microbolometer 10 is likely to have decreased to such an extent that a recalibration is needed. Thus, it will generally not be meaningful to compare statistical measures of response values of time periods separated by merely a few months. Instead, the time span separating the first and second time periods should normally be at least a year, and preferably two or more years.

Upon comparing the first and second statistical measures it is checked if the second statistical measure differs from the first statistical measure by more than a predetermined change (step S05). If the second statistical measure does differ from the first statistical measure by more than the predetermined change, it is determined that the microbolometer 10 needs recalibration (step S06). If, on the other hand, the difference between the first and second statistical measures is smaller than the predetermined difference, it is determined that the microbolometer does not need recalibration (step S07).

The size of the predetermined change may be chosen depending on the desired accuracy of temperature measurements made using the microbolometer. For instance, the predetermined change may be 5 %, such that if the second statistical measure is more than 5 % smaller than the first statistical measure, it is decided that the microbolometer needs recalibrating.

If the ambient conditions around the microbolometer are the same during the first time period and the second time period, a decrease in response values from the first time period to the second time period will indicate that the microbolometer has lost some of its responsivity. However, ambient conditions will rarely be constant, and therefore a temperature sensor may be used for determining an ambient temperature at or near the microbolometer. The temperature sensor may be arranged adjacent the microbolometer. Data on the ambient temperature may be used for adjusting the comparison of the first and second statistical measures. This is indicated in the flow chart in Fig. 4, which shows steps added to the method outlined in Fig. 3. Thus, the ambient temperature is measured (step S101) and a first ambient temperature measured during the first time period is stored (step S102). Similarly, during the second time period a second ambient temperature is measured and stored (step S103). An average of the ambient temperature measured over the respective time period may be stored as the first and second ambient temperatures, respectively.

The steps of monitoring and storing representative values of the response signal (S01, S02, S03) are the same as before, but when comparing (S04) the representative values, i.e. the first and second statistical measures, a possible difference in ambient temperature is taken into account. Thus, if the second ambient temperature differs from the first ambient temperature, the second statistical measure is multiplied by a temperature compensation factor before comparison to the first statistical measure. The temperature compensation factor is proportional to the temperature difference. If the second ambient temperature is higher than the first ambient temperature, the temperature compensation factor takes a positive value below 1. If, on the other hand, the second ambient temperature is lower than the first ambient temperature, the temperature compensation factor takes a value above 1. For small differences in ambient temperature, e.g. <±0.2 °C, there is no need to compensate for the temperature difference, and the temperature compensation value may thus take the value of 1. In the same way as described above, if the difference between the compensated second statistical measure and the first statistical measure is larger than the predetermined change, it is determined that the microbolometer 10 is in need of recalibration, and if the difference is smaller, it is determined that the microbolometer 10 does not need recalibrating.

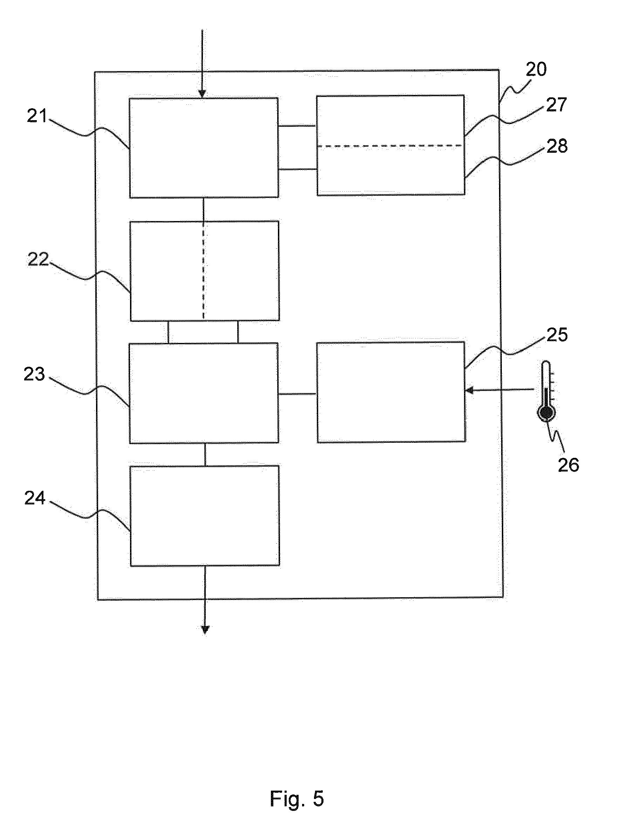

In Fig. 5, a system 20 for detecting a need for recalibration of a microbolometer is shown. This detection system 20 may be operated in accordance with the method described above. In the detection system, a sensor pixel monitor 21 is arranged to monitor the response signal of the monitored pixels 11. Further, a memory 22 is arranged to store the first statistical measure representative of response values read over the first time period and the second statistical measure representative of response values read over the second time period. The memory 22 may be embodied as one memory for storing both statistical measures, or as two separate memories, one for each statistical measure. A comparing module 23 is arranged to compare the first statistical measure to the second statistical measure, and a recalibration determinator 24 is arranged to determine that the microbolometer needs recalibration if the second statistical measure differs from the first statistical measure by more than the predetermined change.

In the embodiment shown, the detection system has a temperature compensator 25 which is arranged to compensate for differences in ambient temperature during the first time period and the second time period. The temperature compensator is arranged to use data from a temperature sensor 26, which is arranged to measure the ambient temperature adjacent the microbolometer 10. The temperature sensor 26 may be integrated in the temperature compensator 25, or it may be arranged adjacent the microbolometer 10 and connected to the temperature compensator 25.

Further, the embodiment shown includes a short term clock device 27 and a long term clock device 28. The short term clock device 27 is arranged to measure each of the first and second time periods. The long term clock device 28 is arranged to measure the time span separating the first and second time periods. The short term clock device 27 and the long term clock device 28 may be embodied as one device or module, or they may be two separate devices or modules.

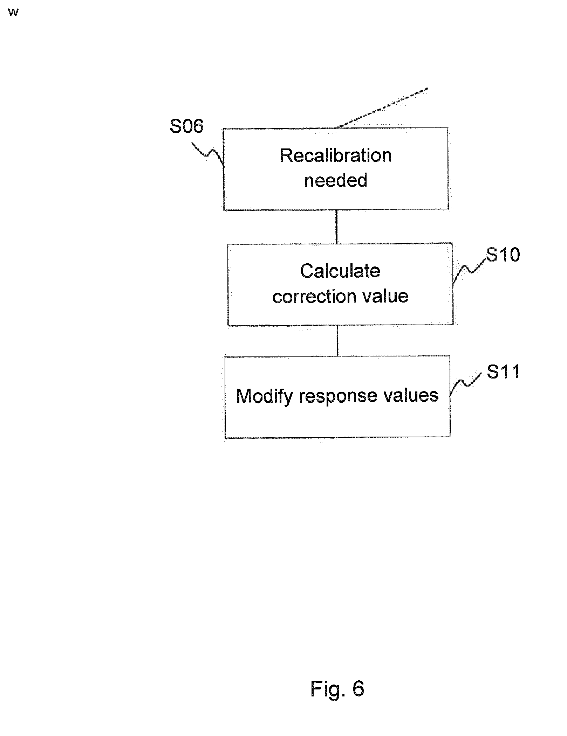

Once it has been determined that the microbolometer 10 needs recalibration, using the method described above, a recalibration may be made according to a method described in the following. In Fig. 6, a flow chart illustrating the recalibration method is shown. The recalibration follows on the step of determining that recalibration is needed (S06) already discussed in connection with Fig. 4. Upon this determination, a correction value is calculated based on the comparison of the first and second statistical values (step S10), and this correction value is used for modifying response values (step S11) of sensor pixels 1 of the microbolometer 10 in subsequent use of the microbolometer. In this manner, recalibrated response values are provided.

The correction value calculated in step S10 may be a gain factor. The modification of response values will in such case be done by multiplying the response values by the gain factor. If, for instance, the second statistical measure is 10 % lower than the first statistical measure, a gain factor of 1.11 (i.e. 1/0.9) is used, such that recalibrated response values read using the aged microbolometer 10 correspond to response values that would have been read when the microbolometer was new. Thus, an actual temperature in the scene captured using the microbolometer 10 will appear the same when the aged microbolometer has been recalibrated as it did when the microbolometer was new.

In some instances it may be useful to calculate the correction value as an offset value and to add this offset value to response values of the sensor pixels 1. Possibly, the response values could be modified both by multiplication with a gain factor and with addition of an offset value.

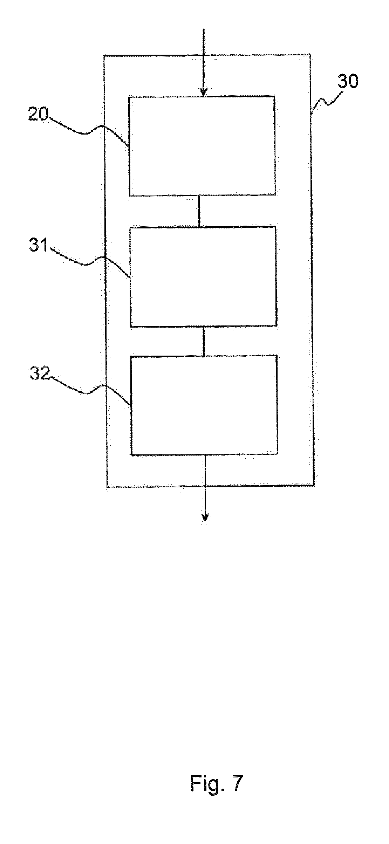

Fig. 7 is a block diagram of a recalibration system 30 which may be operated in accordance with the recalibration method described above. The recalibration system 30 has a detection system 20 of the kind described above for detecting a need for recalibration of the microbolometer 10. Additionally, the recalibration system 30 has a correction calculator 31 arranged to calculate the correction value based on the comparison of the first and second statistical measures. The recalibration system 30 further includes a recalibrator 32 arranged to apply the correction value to the response values of the sensor pixels 1, thereby providing recalibrated response values.

The detection and recalibration methods described in the foregoing may be implemented in the form of software. A computer program product may be provided comprising a computer-readable storage medium with instructions that are adapted to carry out the methods when these instructions are executed by a processor. The processor may be any kind of processor, e.g., a central processing unit (CPU), a custom made processing device implemented in an integrated circuit, an ASIC, an FPGA, or logical circuitry including discrete components.

The systems described above may be embodied as software, firmware, hardware or a combination thereof.

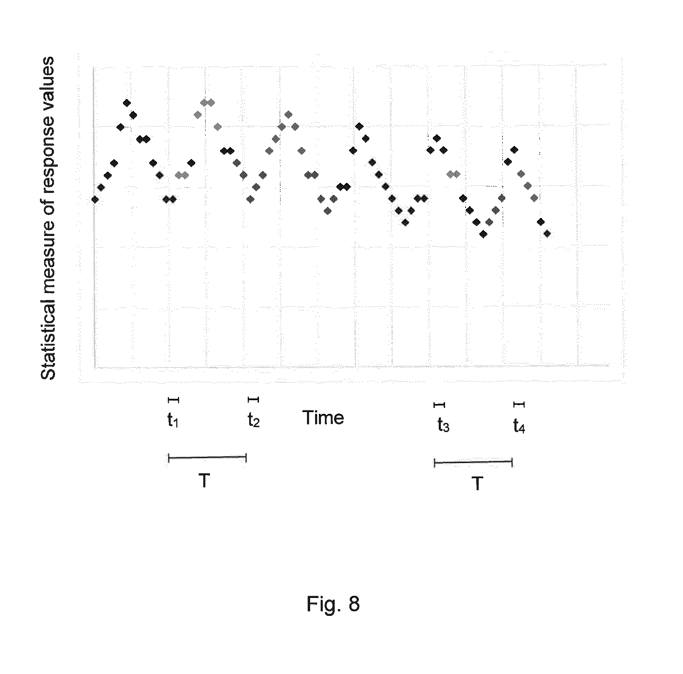

Reference may now be made to Fig. 8, which shows a graph exemplifying data used in the detection method described above. In the graph, representative values of the response signal of the monitored pixels 11 are plotted. In this example, the statistical measure used for representing the response values is a mean response value read over the respective time period. Here, time periods of one month are used. Each month, a mean value of the response signal is stored, illustrated by a mark in the graph. As already mentioned, response values of each monitored pixel 11 may be stored. However, in this example, the statistical measures of the respective sensor pixels 11 are lumped together forming a mean statistical measure for all the monitored sensor pixels. When a comparison of statistical measures of the response values of two time periods is to be made, the two time periods are chosen with a suitable time span separating them. For instance, the first time period may be a month of a first year, and the second time period may be the corresponding month of the next year or a later year. In the graph in Fig. 8, an example of a first time period is indicated by the reference t₁, and an example of a second time period is indicated by the reference t₂. The time span separating these time periods is indicated by the reference T. The first statistical measure representative of response values read over the first time period t₁ is compared to the second statistical measure representative of response values read over the second time period t₂. The difference there between is compared to the predetermined change. If the difference is larger than the predetermined change, it is determined that the microbolometer needs recalibrating.

If, for instance, the second statistical measure is 6 % lower than the first statistical measure, and the predetermined change is 10 %, it is determined that the microbolometer does not need recalibration. At a later point in time, a new comparison may be made, where a third statistical measure representative of response values read over a third time period t₃ is compared to a fourth statistical measure representative of response values read over a fourth time period t₄. For example, the fourth statistical measure may be 11 % lower than the third statistical measure. If the predetermined change is 10 %, it is this time determined that the microbolometer is in need of recalibration. Until it is again determined that the microbolometer needs a new recalibration, response values read after t₄ may be modified by multiplication with a gain factor of 1.12 (i.e. 1/0.89).

Comparisons of statistical measures may also be made between the first time period t₁ and the third time period t₃, and between the first time period t₁ and the fourth time period t₄.

Instead of taking the mean response value read over the respective time period as the statistical measure, the median response value may be used. It is also possible to use other statistical measures, for instance taking a minimum response value and a maximum response value of the time period as the statistical measure. If the minimum and maximum response values are used, they will define a response range. In such case, the predetermined change may be expressed as a range level threshold value. A representative value of that range may be used for the comparison. The representative value may be a centre or median value of the range. If the representative value of the second range is lower than the representative value of the first range, and if the difference between them is above the range level threshold value, it is determined that the microbolometer needs recalibrating.

Other time periods may be used, such that, e.g., a mean response value read over one year is compared to a mean response value read over another year.

The recalibration of the microbolometer may be made more flexible by using, e.g., one correction value at night and another during the day. This may be done by storing one statistical measure representative of the response values read at night during the first time period and another statistical measure representative of response values read in daytime during the same time period. Similarly, two different statistical measures are stored for night and day during the second time period. When recalibrating the microbolometer, a night time correction value may be calculated based on a comparison between the night time statistical measure of the first time period and the night time statistical measure of the second time period, and then this correction value is used for subsequent measurements at night. Similarly, the daytime statistical measures of the first and second time periods are used for calculating a daytime correction value used for modifying measurements made during daytime. Analogously, a summer correction value and a winter correction value may be calculated for use in summer and winter by storing one statistical measure representative of response values read during summer over a first time period of one or more years, and storing another statistical measure representative of response values read during winter over the first time period, and comparing the respective summer or winter statistical measure to a corresponding summer or winter statistical measure representative of response values read over a second time period.

It will be appreciated that a person skilled in the art can modify the above described embodiments in many ways and still use the advantages of the invention as shown in the embodiments above. As an example, when it is determined that the microbolometer needs recalibration, an alarm may be generated, alerting a user of the microbolometer that recalibration is needed. The user may then be prompted to initiate recalibration by, e.g., pressing a button in a user interface. Recalibration may otherwise be automatic when it has been determined that recalibration is needed, and the user may or may not be notified of the recalibration need.

The method of detecting the need for recalibration of the microbolometer may be performed intermittently, e.g., once a month. Alternatively, the detection method may performed continuously, using moving time periods (e.g., the last 30 days compared to the corresponding 30 days of the previous year instead of February this year compared to February last year). If intermittent detection is used, the frequency of detections may be increased if it has been determined that the difference between the first and second statistical measures is not bigger than the predetermined change, but still above a lower predetermined threshold. For instance, if the predetermined change is 8 %, and the lower predetermined threshold is 5 %, then if the second statistical measure is 6 % smaller than the first statistical measure it may be determined that the detection method should be performed more frequently. Alternatively or additionally, the user may be notified that the responsivity of the microbolometer has decreased, although not to such an extent that recalibration is needed. Further, if intermittent detection is used, the frequency may be increased with time, such that it is performed, e.g., once a month when the microbolometer is new, and, e.g., twice a month when the microbolometer is ten years old.

Reading response values of the monitored pixels may be done at any suitable frequency. For instance, readings could be made at each frame captured using the microbolometer. Still, this will generally not be necessary. Instead, readings may be made, e.g., during one hour four times a day, or at another frequency of choice.

It should be noted that a temperature compensation similar to the one described above is generally performed during normal use of a temperature alarm camera. If the camera in which the microbolometer is used has such a temperature compensation system for use in normal capture of images, the same temperature compensation system may preferably be used in the detection method and system.

As described above, the temperature compensation of the comparison of the first and second statistical measures is done by multiplying the second statistical measure by the temperature compensation factor before comparison to the first statistical measure. Naturally, the temperature compensation factor may instead be calculated inverted, and for compensating the comparison of the statistical measures the first statistical measure is multiplied by that inverted temperature compensation factor before comparison to the second statistical measure.

In the example described above, 100 pixels are monitored, here corresponding to about 0.1 % of the sensor pixels. Other numbers of monitored pixels may be chosen, such that, e.g., 1 % of the sensor pixels are monitored. For instance, a number of groups of adjacent pixels may be monitored, instead of a number of single pixels. As an example, 100 groups of 3 x 3 pixels may be monitored. In this manner, the influence of possibly defective pixels may be further reduced.

The number of monitored pixels and the size of the predetermined change may be balanced against each other, such that if a relatively small change is considered large enough to indicate a need for recalibration, a small number of pixels are monitored. If, however, a relatively large change is required before the microbolometer is deemed to need recalibrating, a larger number of pixels may be monitored, such that defective pixels do not have an overly large impact on the determination of the recalibration need.

As already indicated in the background section, the response value may be measured either in volts or in amperes.

The detection system, as well as the recalibration system, may be integrated in a camera in which the microbolometer is used. Alternatively, the systems may be separate from the camera, and operatively connected to it. Further, the detection system may be separate from or integrated in the recalibration system.

Thus, the invention should not be limited to the shown embodiments but should only be defined by the appended claims.

## Claims

1. A method of detecting a need for recalibrating a microbolometer (10), said microbolometer comprising a plurality of sensor pixels (1), said method comprising the steps of:
for a predetermined number of monitored sensor pixels (11) monitoring a response signal (S01),
storing a first statistical measure (S02) representative of response values read over a first time period (t₁),
storing a second statistical measure (S03) representative of response values read over a second time period (t₂), said second time period (t₂) being later than said first time period (t₁),
comparing said first statistical measure to said second statistical measure (S04), and
if said second statistical measure differs from said first statistical measure by more than a predetermined change, determining that said microbolometer (10) needs recalibration (S06).

2. The method according to claim 1, wherein said first and second statistical measures are each a mean response value, a median response value, or a minimum and maximum response value of the respective time period (t₁, t₂).

3. The method according to claim 1 or 2, wherein a first and a second statistical measure of the response values is stored for each monitored pixel (11).

4. The method according to any one of the preceding claims, wherein said first time period (t₁) and said second time period (t₂) are each one month.

5. The method according to any one of the preceding claims, wherein said first and second time periods (t₁, t₂) are at least one year apart.

6. The method according to any one of the preceding claims, further comprising
measuring an ambient temperature (S101) adjacent said microbolometer (10) during said first and second time periods (t₁, t₂),
storing said ambient temperature measurements (S102, S103), and adjusting said comparison (S04) of the first and second statistical measures based on said ambient temperature measurements.

7. The method according to any one of the preceding claims wherein
said predetermined change comprises a range level threshold value,
and
wherein it is determined that said microbolometer (10) needs recalibration (S06) if said second statistical measure is lower than said first statistical measure and the difference between said statistical measures is above said range level threshold.

8. A method of recalibrating a microbolometer comprising the steps of:
determining that a recalibration is needed (S06) according to any one of the preceding claims,
based on the comparison of the first and second statistical measures, calculating a correction value (S10), and
modifying response values (S11) of said sensor pixels (1) of said microbolometer (10) using said correction value, thereby providing recalibrated response values.

9. The method according to claim 8, wherein
calculating a correction value (S10) comprises calculating a gain factor, and wherein
modifying said response values (S11) comprises multiplying response values of said sensor pixels (1) of said microbolometer (10) by said gain factor.

10. The method according to claim 8 or 9, wherein
calculating a correction value (S10) comprises calculating an offset value, and wherein
modifying said response values (S11) comprises adding said offset value to response values of said sensor pixels (1) of said microbolometer (10).

11. A system for detecting a need for recalibrating a microbolometer, said detecting system (20) comprising:
a sensor pixel monitor (21) arranged to monitor a response signal of a predetermined number of sensor pixels (11) of said microbolometer (10),
a memory (22) arranged to store a first statistical measure representative of response values read over a first time period (t₁), and arranged to store a second statistical measure representative of response values read over a second time period (t₂), said second time period (t₂) being later than said first time period (t₁),
a comparing module (23) arranged to compare said first statistical measure to said second statistical measure, and
a recalibration determinator (24) arranged to determine that said microbolometer (10) needs recalibration if said second statistical measure differs from said first statistical measure by more than a predetermined change.

12. The system according to claim 11, further comprising a temperature sensor (26) arranged to measure an ambient temperature adjacent said microbolometer (10).

13. The system according to claim 11 or 12, further comprising a short term clock device (27) for measuring the first and second time periods (t₁, t₂), and a long term clock device (28) for measuring a time span (T) including at least the first and second time periods (t₁, t₂).

14. A system for recalibration of a microbolometer, said recalibration system (30) comprising:
a detecting system (20) according to any one of claims 11-13,
a correction calculator (31) arranged to calculate a correction value as at least one of a gain factor and an offset value based on the comparison of the first and second statistical measures, and
a recalibrator (32) arranged to apply said correction value to response values of said sensor pixels (1) of said microbolometer (10), thereby providing recalibrated response values.

15. A computer program product comprising a computer-readable storage medium with instructions adapted to carry out the method according to any one of claims 1-10 when executed by a processor.
